# EUROPÄISCHE PATENTSCHRIFT

(11) **EP 4 428 487 B1**
(45) Veröffentlichungstag und Bekanntmachung des Hinweises auf die Patenterteilung: **13.08.2025**
(21) Anmeldenummer: 23160142.8
(22) Anmeldetag: 06.03.2023
(51) Int. Cl.: G01B 11/06

(54) **VORRICHTUNG UND VERFAHREN ZUM BESTIMMEN DER WANDDICKE EINES GEGENSTANDES**
APPARATUS AND METHOD FOR DETERMINING WALL THICKNESS OF AN OBJECT
DISPOSITIF ET PROCÉDÉ POUR DÉTERMINER L'ÉPAISSEUR DE PAROI D'UN OBJET

(43) Veröffentlichungstag der Anmeldung: 11.09.2024
(73) Patentinhaber: SIKORA AG, 28307 Bremen (DE)
(72) Erfinder: SCHUH, Kolja Tobias, 28307 Bremen (DE)
(74) Vertreter: Hauck Patent- und Rechtsanwälte PartmbB

(56) Entgegenhaltungen:
- CN-A- 114 839 619
- DE-B4- 102017 207 648

## Beschreibung

Die Erfindung betrifft eine Vorrichtung zum Bestimmen der Wanddicke eines insbesondere flachen oder länglichen Gegenstandes, umfassend eine erste Messvorrichtung umfassend einen ersten Sender für Terahertzstrahlung und einen ersten Empfänger für Terahertzstrahlung, und umfassend eine zweite Messvorrichtung umfassend einen zweiten Sender für Terahertzstrahlung und einen zweiten Empfänger für Terahertzstrahlung, wobei die erste Messvorrichtung so angeordnet ist, dass der erste Sender Terahertzstrahlung auf den Gegenstand aussendet und der erste Empfänger von Grenzflächen des Gegenstands reflektierte, von dem ersten Sender ausgesendete Terahertzstrahlung empfängt, und wobei die zweite Messvorrichtung so angeordnet ist, dass der zweite Sender Terahertzstrahlung auf den Gegenstand aussendet und der zweite Empfänger von Grenzflächen des Gegenstands reflektierte, von dem zweiten Sender ausgesendete Terahertzstrahlung empfängt, wobei der erste Sender Terahertzstrahlung in einem ersten Frequenzbereich mit einer ersten Bandbreite um eine erste Mittenfrequenz aussendet und der zweite Sender Terahertzstrahlung in einem zweiten Frequenzbereich mit einer zweiten Bandbreite um eine von der ersten Mittenfrequenz unterschiedliche zweite Mittenfrequenz aussendet, und umfassend eine Auswerteeinrichtung, an der die Messwerte des ersten und zweiten Empfängers zum Bestimmen der Wanddicke des Gegenstandes anliegen,

Die Erfindung betrifft außerdem ein Verfahren zum Bestimmen der Wanddicke eines insbesondere flachen oder länglichen Gegenstandes, bei dem ein erster Sender Terahertzstrahlung auf den Gegenstand aussendet und von Grenzflächen des Gegenstands reflektierte, von dem ersten Sender ausgesendete Terahertzstrahlung von einem ersten Empfänger empfangen wird, und bei dem ein zweiter Sender Terahertzstrahlung auf den Gegenstand aussendet und von Grenzflächen des Gegenstands reflektierte, von dem zweiten Sender ausgesendete Terahertzstrahlung von einem zweiten Empfänger empfangen wird, wobei der erste Sender Terahertzstrahlung in einem ersten Frequenzbereich mit einer ersten Bandbreite um eine erste Mittenfrequenz aussendet und der zweite Sender Terahertzstrahlung in einem zweiten Frequenzbereich mit einer zweiten Bandbreite um eine von der ersten Mittenfrequenz unterschiedliche zweite Mittenfrequenz aussendet.

Mit derartigen Vorrichtungen bzw. Verfahren werden zum Beispiel Wanddicken von in einer Extrusionsvorrichtung hergestellten Kunststoffrohren vermessen. Auch plattenförmige Gegenstände können mit solchen Vorrichtungen und Verfahren vermessen werden. Die Gegenstände können auch aus einem Glas bestehen. Um die optische Dicke dünner Wände derartiger Gegenstände mittels Terahertzstrahlung eindeutig zu bestimmen, wird typischerweise die durch Reflexion an den die zu vermessende Wand begrenzenden Grenzschichten entstehende Frequenz- und/oder Phasendifferenz der Strahlungsanteile bestimmt. Insbesondere bei dünnen Wänden kann dies durch Mischung der beiden Signalanteile der an den Grenzflächen reflektierten Strahlung geschehen. Für eine einfachere Auswertung kann der niederfrequente Anteil des gemischten Signals isoliert werden. Dieses isolierte Signal ist mit einer Frequenz moduliert, die proportional zu der Differenzfrequenz zwischen den Signalanteilen und damit zur Wanddicke ist.

Schwierig ist es, diese Frequenz vor dem Hintergrund von Signalstörungen, beispielsweise durch Rauschen, weitere Reflexionen oder unbekannte physikalische Phänomene, wie eine unbekannte Dispersion des Gegenstands, etc., zu ermitteln. Dies gilt besonders, wenn das für die Auswertung zur Verfügung stehende Signal aufgrund der begrenzten Bandbreite der für die Messung verwendeten Terahertzstrahlung nur aus einer Schwingungsperiode oder sogar nur einem Teil einer Schwingungsperiode der zu ermittelnden Frequenz besteht. Die Bandbreite der für die Messung verwendeten Terahertzstrahlung bestimmt bei gegebenem Material des Gegenstands und gegebener Wanddicke den für die Bestimmung der Frequenz des auszuwertenden Signals zur Verfügung stehenden Signalbereich, insbesondere die für die Auswertung zur Verfügung stehende(n) Signalperiode(n). Um die zur Wanddicke proportionale Frequenz des auszuwertenden Signals eindeutig zu bestimmen, ist es also wünschenswert, mindestens eine vollständige Periode, besser noch mehrere Perioden, des auszuwertenden Signals auswerten zu können. Erreicht werden kann dies vor dem obigen Hintergrund, indem die Bandbreite der Messvorrichtung vergrößert wird. Dies ist allerdings technologisch herausfordernd. Jedenfalls erhöhen sich hierdurch die Kosten der Messvorrichtung erheblich. Darüber hinaus erfordern höhere Bandbreiten die Verwendung höherer Mittenfrequenzen, da verschiedene Bauteile der Messvorrichtung, wie zum Beispiel Linsen, Hochfrequenzleiter oder Frequenzvervielfacher in ihrer relativen Bandbreite limitiert sind. Höhere Frequenzen führen jedoch dazu, dass die eindeutige Zuordnung einer Frequenz zu dem gemessenen Signalverlauf schwieriger wird. Denn die möglicherweise zu dem Signalverlauf passenden Frequenzen liegen näher beieinander. Darüber hinaus führen höhere Frequenzen der Terahertzstrahlung bei vielen Materialien zu einer erhöhten Absorption des Strahlungssignals, was eine zuverlässige Messung und Auswertung zusätzlich erschweren oder sogar verhindern kann.

Aus DE 10 2017 207 648 B4 sind ein Verfahren und eine Vorrichtung zur Messung der Schichtdicke eines Objekts bekannt, bei denen in mindestens zwei Messschritten elektromagnetische Strahlung von jeweils einem von mehreren Sendern auf das Objekt eingestrahlt wird. Die Frequenzbänder der einzelnen Messschritte sind unterschiedliche Teilbereiche einer Bandbreite. In den Messschritten wird jeweils von Grenzschichten des Objekts reflektierte Sekundärstrahlung detektiert und jeweils ein Messsignal ermittelt. Die Messsignale der einzelnen Messschritte werden gemäß den jeweiligen Frequenzbändern zu einem Auswertesignal zusammengeführt, insbesondere indem die Messsignale der einzelnen Messschritte abhängig vom jeweiligen Frequenzbereich über eine gemeinsame Frequenzachse aufgetragen werden. Zur Ermittlung der Schichtdicke des Objekts wird eine Grundfrequenz des Auswertesignals bestimmt, insbesondere indem die über die gemeinsame Frequenzachse aufgetragenen Messsignale gefittet werden. Auf diese Weise soll eine Messung über die gesamte Bandbreite durch einzelne Messschritte in Teilbereichen der Bandbreite angenähert werden können. Insbesondere soll auf diese Weise eine präzise Messung unter Verwendung mehrerer kostengünstiger schmalbandiger Sender und Empfänger für elektromagnetische Strahlung möglich sein.

Durch das in DE 10 2017 207 648 B4 vorgeschlagene Zusammenführen von Messsignalen, die jeweils einen Teilbereich der gesamten Bandbreite abdecken, durch Fitten der über eine gemeinsame Frequenzachse aufgetragenen Messsignale der einzelnen Messschritte muss jeder in den einzelnenn Messschritten genutzte Sender und Empfänger allerdings eine hohe Signalqualität besitzen, um Mehrdeutigkeiten im Rahmen des Fitvorgangs auszuschließen. Dadurch sind die erforderlichen Sender und Empfänger weiterhin relativ kostenaufwendig. Auch erfordert das in DE 10 2017 207 648 B4 vorgeschlagene Zusammenführen der einzelnen Messsignale Kenntnis über zumindest die relativen Amplituden der einzelnen Signalteile, was im Idealfall zumindest eine Kalibrierung voraussetzt, aber durch unterschiedliche Absorption in der zu betrachtenden Schicht oder aufgrund von sich zu den einzelnen Sendern und Empfängern unterscheidenden Ausrichtungen des Objekts von Fall zu Fall unterscheiden kann. Werden die relativen Amplituden nicht oder falsch berücksichtigt, ergibt sich dadurch eine Modulation im zusammengeführten Signal, die die Bestimmung der Grundfrequenz und damit der Schichtdicke verfälschen kann. Dies stellt eine besondere Herausforderung dar, wenn die durch die einzelnen Messsignale abgedeckten Teilbereiche der Bandbreite klein sind. Daher sind wiederum relativ breitbandige und damit kostenaufwendige Sender und Empfänger erforderlich. Besondere Probleme ergeben sich auch bei sich bewegenden Objekten, zum Beispiel in einer Extrusionsvorrichtung hergestellten und entlang einer Förderrichtung durch den Messbereich geförderten Objekten. So ist aufgrund des Zusammenführens der einzelnen Messsignale über einer gemeinsamen Frequenzachse und einem Fitten der Messignale das in DE 10 2017 207 648 B4 vorgeschlagene Verfahren empfindlich gegenüber Abweichungen der einzelnen Messungen, insbesondere wenn nicht zur selben Zeit, nicht am selben Ort des Objekts oder nicht aus derselben Richtung gemessen wird.

Ausgehend von dem erläuterten Stand der Technik liegt der Erfindung daher die Aufgabe zugrunde, eine Vorrichtung und ein Verfahren der eingangs genannten Art bereitzustellen, mit denen die Wanddicke eines insbesondere flachen oder länglichen Gegenstandes auch bei dünnen Wänden in messtechnisch einfacher und kostengünstiger Weise eindeutig möglich ist, insbesondere auch bei während der Messung bewegten Gegenständen.

Die Erfindung löst die Aufgabe durch die unabhängigen Ansprüche 1 und 17. Vorteilhafte Ausgestaltungen finden sich in den abhängigen Ansprüchen, der Beschreibung und den Figuren.

Die Erfindung löst die Aufgabe für eine Vorrichtung der eingangs genannten Art dadurch, dass die Auswerteeinrichtung ausgebildet ist, mehrere einem Signalverlauf der Messwerte des ersten Empfängers angenäherte periodische Referenzverläufe zu bestimmen, die bestimmten periodischen Referenzverläufe mit einem Signalverlauf der Messwerte des zweiten Empfängers zu vergleichen und aus den bestimmten periodischen Referenzverläufen den dem Signalverlauf der Messwerte des zweiten Empfängers am besten entsprechenden periodischen Referenzverlauf zu identifizieren, und dass die Auswerteeinrichtung weiter dazu ausgebildet ist, anhand des identifizierten Referenzverlaufs die Wanddicke des Gegenstands zu bestimmen.

Für ein Verfahren der eingangs genannten Art löst die Erfindung die Aufgabe dadurch, dass mehrere einem Signalverlauf der Messwerte des ersten Empfängers angenäherte periodische Referenzverläufe bestimmt werden, die bestimmten periodischen Referenzverläufe mit einem Signalverlauf der Messwerte des zweiten Empfängers verglichen werden und aus den bestimmten periodischen Referenzverläufen der dem Signalverlauf der Messwerte des zweiten Empfängers am besten entsprechende periodische Referenzverlauf identifiziert wird, und dass anhand des identifizierten Referenzverlaufs die Wanddicke des Gegenstands bestimmt wird.

Wie eingangs erläutert, kann der zu vermessende Gegenstand zum Beispiel aus Kunststoff oder Glas bestehen. Er ist zumindest teiltransparent für Terahertzstrahlung, so dass auf den Gegenstand ausgesandte Terahertzstrahlung an den eine zu vermessende Wand des Gegenstands begrenzenden Grenzflächen reflektiert wird. Sofern es sich um einen flachen Gegenstand handelt, kann dieser zum Beispiel plattenförmig sein. Sofern es sich um einen länglichen Gegenstand handelt, kann dieser zum Beispiel strangförmig sein. Insbesondere kann der längliche Gegenstand zylindrisch, insbesondere hohlzylindrisch sein. Es kann sich um einen rohrförmigen Gegenstand, insbesondere ein Kunststoff- oder Glasrohr, handeln. Der Gegenstand kann in einer Extrusionsvorrichtung erzeugt werden. Es ist möglich, dass der Gegenstand zum Zeitpunkt der erfindungsgemäßen Messung noch nicht vollständig abgekühlt ist, insbesondere also noch fließfähige Anteile aufweist. Der Gegenstand kann mittels einer Fördereinrichtung durch den Messbereich der Vorrichtung gefördert werden, ein länglicher Gegenstand insbesondere entlang seiner Längsachse. Wie erläutert, ist insbesondere bei einer solchen Bewegung des Gegenstands während der Messung die Schichtdickenbestimmung eine Herausforderung.

Der erste Sender und der erste Empfänger für Terahertzstrahlung können sich im Wesentlichen am selben Ort befinden. Sie können zu einem ersten Transceiver zusammengefasst sein. Der zweite Sender und der zweite Empfänger für Terahertzstrahlung können sich ebenfalls im Wesentlichen am selben Ort befinden. Sie können zu einem zweiten Transceiver zusammengefasst sein. Wie erläutert, dringt die von dem ersten bzw. zweiten Sender ausgesandte Terahertzstrahlung zumindest teilweise in den Gegenstand ein und wird an Grenzflächen des Gegenstandes, insbesondere den eine zu vermessende Wand des Gegenstands begrenzenden Flächen reflektiert. Sofern vorliegend von Terahertzstrahlung gesprochen wird, betrifft dies insbesondere elektromagnetische Strahlung im Frequenzbereich von 1 GHz bis 6 THz, insbesondere im Frequenzbereich von 50 GHz bis 1 Thz. Es handelt sich folglich um sogenannte Millimeter- oder Submillimeterwellen. Bei der Terahertzstrahlung handelt es sich insbesondere um FMCW-Strahlung (Frequency Modulated Continuous Wave-Strahlung).

Der erste Sender und der zweite Sender senden Terahertzstrahlung in Frequenzbereichen um unterschiedliche Mittenfrequenzen aus. Wie nachfolgend noch näher erläutert wird, nutzt die Erfindung eine Auswertung der auf unterschiedlichen Frequenzen ausgesendeten Terahertzstrahlung für eine gegenüber dem Stand der Technik erheblich vereinfachte eindeutige Wanddickenbestimmung. Die Auswerteeinrichtung bestimmt mehrere einem durch den ersten Empfänger aufgenommenen Signalverlauf möglichst gut angenäherte periodische Referenzverläufe. Zum Beispiel können in einem vorzugsweise numerischen Kurvenfitverfahren mehrere periodische Referenzverläufe bestimmt werden, die dem Signalverlauf der Messwerte des ersten Empfängers möglichst gut entsprechen. Es ist zum Beispiel möglich, dass mindestens zwei, vorzugweise mindestens drei, und/oder nicht mehr als zehn, vorzugweise nicht mehr als fünf dem Signalverlauf der Messwerte des ersten Empfängers am besten entsprechende periodische Referenzverläufe bestimmt werden. Beispielsweise können genau drei oder genau vier periodische Referenzverläufe bestimmt werden. Grundsätzlich kann, wie eingangs erläutert, insbesondere bei FMCW-Terahertzstrahlung davon ausgegangen werden, dass die Frequenz des Signalverlaufs der Messwerte des ersten Empfängers proportional zu der zu messenden Wanddicke ist. Wie ebenfalls eingangs erläutert, können zum Bilden des Signalverlaufs der Messwerte des ersten Empfängers die Frequenz- und/oder Phasendifferenz der Signalanteile bestimmt werden, die durch Reflexion an den die in ihrer Dicke zu vermessende Wand begrenzenden Grenzflächen entstehen. Wie ebenfalls eingangs erläutert, können die an den die Wand begrenzenden Grenzflächen reflektierten Strahlungsanteile gemischt werden. Der Signalverlauf kann vor der Auswertung zum Beispiel durch einen entsprechenden Frequenzfilter, insbesondere einen Tiefpass, gefiltert und somit auf seine niederfrequenten Anteile reduziert werden. Wie weiterhin eingangs erläutert, ist dieser Signalverlauf mit einer Frequenz moduliert, die proportional zur Differenzfrequenz der an den beiden Grenzflächen der Wand reflektierten Signalanteile und damit der Wanddicke ist.

Zur Lösung der eingangs erläuterten Probleme der eindeutigen Ermittlung der Frequenz des Signalverlaufs wird zunächst wie in DE 10 207 207 648 B4 eine zweite Messvorrichtung verwendet, die mit Terahertzstrahlung anderer Frequenzen arbeitet. Anders als in DE 10 207 207 648 B4 vorgeschlagen erfolgt erfindungsgemäß allerdings kein Zusammenführen der Messignale der ersten und zweiten Messvorrichtung. Vielmehr wird erfindungsgemäß in einem ersten Schritt zunächst die Auswertung vereinfacht, indem mehrere dem Signalverlauf der Messwerte des ersten Empfängers möglichst gut entsprechende periodische Referenzverläufe bestimmt werden. Da die Identifizierung des dem Signalverlauf am besten entsprechenden periodischen Referenzverlauf aus der bestimmten Gruppe periodischer Referenzverläufe nicht zuletzt aufgrund von Störungen im Signalverlauf, aber auch aufgrund der begrenzten Bandbreite der Terahertzstrahlung der ersten Messvorrichtung schwierig ist, werden in einem zweiten Schritt anstelle eins Zusammenführens der Messsignale (nur) die bestimmten periodischen Referenzverläufe mit einem Signalverlauf der Messwerte des zweiten Empfängers verglichen. Auch dieser Signalverlauf kann erzeugt werden, indem die Frequenz- und Phasendifferenz der Signalanteile bestimmt wird, die durch Reflexion der von dem zweiten Sender ausgesandten Terahertzstrahlung an den Grenzschichten der Wand entstehen. Wiederum kann eine Mischung der Signalanteile erfolgen, wie dies oben erläutert wurde. Auch die Messwerte des zweiten Empfängers können mittels eines Frequenzfilters, insbesondere eines Tiefpasses, gefiltert werden bevor sie durch die Auswerteeinrichtung ausgewertet werden.

Auf Grundlage des Vergleichs der im ersten Schritt bestimmten, und bereits auf eine relativ geringe Zahl reduzierten möglichen periodischen Referenzverläufe mit dem Signalverlauf der Messwerte des zweiten Empfängers kann nunmehr aus der im ersten Schritt bestimmten Gruppe periodischer Referenzverläufe in einfacher Weise derjenige periodische Referenzverlauf identifiziert werden, der dem Signalverlauf der Messwerte des zweiten Empfängers optimal entspricht. Dabei wird insbesondere die Phasenlage der periodischen Referenzverläufe ausgewertet. Aufgrund der unterschiedlichen Frequenzen der ersten und zweiten Messvorrichtung liegen die Phasen der zum Signalverlauf des ersten Empfängers bestimmten periodischen Referenzverläufe im Frequenzbereich des zweiten Empfängers deutlich auseinander. Damit kann aus den zum Signalverlauf des ersten Empfängers in ihrer Phasenlage noch relativ nahe beieinander liegenden periodischen Referenzverläufen anhand eines Vergleichs insbesondere mit der Phase des Signalverlaufs des zweiten Empfängers in einfacher Weise und eindeutig der letztlich zu beiden Signalverläufen des ersten und zweiten Empfängers optimal passende periodische Referenzverlauf identifiziert werden. Die damit vorliegende (Grund-)Frequenz des als passend identifizierten periodischen Referenzverlaufs erlaubt dann wie erläutert in einfacher Weise die Bestimmung der Wanddicke des Gegenstands.

Der Vergleich der Referenzverläufe mit dem Signalverlauf des zweiten Empfängers vereinfacht sich erheblich, da im ersten Schritt die Anzahl der möglichen Referenzverläufe bereits stark reduziert wurde. Da im ersten Schritt noch nicht ein einzelner der bestimmten periodischen Referenzverläufe ausgewählt werden muss, müssen der erste Sender und der erste Empfänger entsprechend nicht mit einer konstruktiv aufwändigen und teuren hohen Bandbreite senden bzw. empfangen. Da darüber hinaus im zweiten Schritt nur noch eine eng begrenzte Anzahl von periodischen Referenzverläufen mit dem Signalverlauf des zweiten Empfängers verglichen werden muss, deren Phasen im Übrigen bei entsprechenden Frequenzunterschieden zwischen der ersten und zweiten Messvorrichtung im Frequenzbereich des zweiten Empfängers deutlich auseinanderlaufen, kann die zweite Messvorrichtung mit einer derart niedrigen Bandbreite betrieben werden, die die Identifizierung der Frequenz des Signalverlaufs allein nicht ermöglichen würde. Durch die Auswertung der Phasenlage ist auch bei besonders schmalbandiger zweiter Messvorrichtung eine eindeutige Auswahl des passenden Referenzverlaufs aus dem Satz an zuvor bestimmten Referenzverläufen möglich. Die zweite Messvorrichtung kann daher im Gegensatz zum Stand der Technik besonders kostengünstig bzw. schmalbandig, und insbesondere kostengünstiger bzw. schmalbandiger als die erste Messvorrichtung ausgeführt werden. Auch ist das erfindungsgemäße Verfahren wesentlich unempfindlicher gegenüber Abweichungen zwischen den Messungen der ersten und zweiten Messvorrichtungen, insbesondere wenn diese nicht zur selben Zeit, nicht am selben Ort des Objekts oder nicht aus derselben Richtung messen. Damit stellt erfindungsgemäß auch die Vermessung während der Messung durch den Messbereich geförderter Gegenstände kein Problem dar.

Insgesamt ist es durch die kombinierte Messung mit zwei Messvorrichtungen, die auf unterschiedlichen Frequenzen arbeiten und die Auswahl eines passenden Referenzverlaufs mittels der zweiten Messvorrichtung aus einem Satz mittels der ersten Messvorrichtung bestimmter Referenzverläufe möglich, die Wanddicke des Gegenstandes auch bei dünnen Wanddicken mittels verhältnismäßig einfach aufgebauten Messvorrichtungen eindeutig zu bestimmen. Die zu vermessende Wand kann zum Beispiel eine Dicke von weniger als 10 cm, weiter von weniger als 5 cm, weiter von weniger als 1 cm, aufweisen.

Selbstverständlich wären auch mehrere zweite Messvorrichtungen denkbar. In diesem Fall könnte ein Vergleich der im ersten Schritt bestimmten periodischen Referenzverläufe mit Signalverläufen mehrerer zweiter Empfänger erfolgen. Insbesondere wenn die mehreren zweiten Messvorrichtungen in Frequenzbereichen um unterschiedliche Mittenfrequenzen senden und empfangen, kann dies die Auswertung weiter verbessern.

Nach einer Ausgestaltung können die Signalverläufe und die periodischen Referenzverläufe Phasenverläufe oder Frequenzverläufe sein. Wie erläutert, können die von den die zu vermessende Wand begrenzenden Grenzflächen reflektierten Strahlungsanteile in dem Signalverlauf des ersten bzw. zweiten Empfängers gemischt werden. Aufgrund physikalischer Gesetzmäßigkeiten besteht eine feste Beziehung zwischen der Phase und der Frequenz des Signalverlaufs, so dass zum Beispiel in einem Phasenverlauf die Phase zur Auswertung herangezogen werden kann, um die Frequenz des Signalverlaufs und damit letztlich die Wanddicke zu bestimmen. Hierdurch kann die Genauigkeit verbessert werden. Der Phasenverlauf kann ein Verlauf der Phase der Terahertzstrahlung aufgetragen über der Frequenz der Terahertzstrahlung des ersten bzw. zweiten Empfängers sein. Der Frequenzverlauf kann ein Verlauf der Frequenz der Terahertzstrahlung des ersten bzw. zweiten Empfängers aufgetragen über der Zeit sein.

Gemäß einer weiteren Ausgestaltung können die periodischen Referenzverläufe harmonische Referenzverläufe sein. Harmonische Referenzverläufe sind bekanntlich insbesondere kosinus- oder sinusförmig. Der Signalverlauf des ersten bzw. zweiten Empfängers aus den gemischten, an den beiden Grenzflächen der Wand reflektierten Strahlungsanteile entspricht idealerweise einem solchen harmonischen Verlauf. Die erfindungsgemäße Auswertung wird hierdurch weiter vereinfacht.

Wie bereits erläutert, kann der dem Signalverlauf der Messwerte des zweiten Empfängers am besten entsprechende periodische Referenzverlauf anhand eines Vergleichs der Phasen der bestimmten periodischen Referenzverläufe mit der Phase des Signalverlaufs der Messwerte des zweiten Empfängers identifiziert werden. Die Auswerteeinrichtung der erfindungsgemäßen Vorrichtung ist dazu entsprechend ausgebildet. Eine solche Auswertung der Phasenlage erleichtert die Auswahl des passenden Referenzverlaufs auch bei schmalbandiger zweiter Messvorrichtung erheblich. Insbesondere sind auch unterschiedliche Amplituden der Signalverläufe der ersten und zweiten Messvorrichtung bei einer Auswertung der Phasenlage weitgehend unkritisch.

Die zweite Mittenfrequenz kann nach einer weiteren Ausgestaltung kleiner sein als die erste Mittenfrequenz. Beispielsweise kann die zweite Mittenfrequenz gleich der ersten Mittenfrequenz multipliziert mit einem Faktor in einem Bereich von 0,3 bis 0,7, vorzugsweise mit einem Faktor in einem Bereich von 0,4 bis 0,6, sein. Weiterhin ist es möglich, dass der erste Frequenzbereich und der zweite Frequenzbereich keine Überlappung aufweisen. Für eine besonders einfache und gleichzeitig eindeutige Auswertung ist es zunächst wünschenswert, die Mittenfrequenz des zweiten Senders und Empfängers niedrig zu wählen, um die Dichte der zu dem Signalverlauf des zweiten Empfängers passenden Referenzverläufe gering zu halten. Insbesondere wird verhindert, dass benachbarte periodische Referenzverläufe, die zu dem Signalverlauf des ersten Empfängers bestimmt wurden, beide zu dem Signalverlauf des zweiten Empfängers passen könnten. Zum anderen wird hierdurch eine hohe Absorption der Terahertzstrahlung vermieden. Einzig Frequenzen nahe Null sind zu vermeiden, da die Phasen aller Lösungen hier zusammenlaufen und somit nur schlecht zu unterscheiden sind. Weiterhin sollte die Frequenz der Terahertzstrahlung der zweiten Messvorrichtung ausreichend weit von der der ersten Messvorrichtung entfernt liegen, da die Phasendifferenzen im Signalverlauf des zweiten Empfängers grob proportional zum Abstand zwischen der ersten und zweiten Mittenfrequenz sind. Die die Identifizierung des zum Signalverlauf des zweiten Empfängers optimal passenden periodischen Referenzverlaufs ist dadurch weiter vereinfacht. Als besonders vorteilhaft haben sich die oben erläuterten Frequenzunterschiede erwiesen, da in diesen Bereichen die Phasendifferenz benachbarter Lösungen am größten ist. Aufgrund der erläuterten Überlegungen ist der erfindungsgemäße Ansatz auch einer direkten Auswertung mit einer entsprechend höheren Bandbreite nur eines Senders und Empfängers deutlich überlegen.

Die erste Mittenfrequenz kann zum Beispiel in einem Bereich von 100 bis 200 GHz, vorzugsweise in einem Bereich von 120 bis 180 GHz liegen. Die zweite Mittenfrequenz kann entsprechend in einem Frequenzbereich von etwa 60 GHz bis 100 GHz, vorzugsweise in einem Bereich von 70 GHz bis 90 GHz, liegen. Diese Werte sind allerdings lediglich beispielhaft. Abhängig von der konkreten Anwendung können die Mittenfrequenzen auch andere Werte besitzen.

Nach einer weiteren Ausgestaltung kann die zweite Bandbreite kleiner sein als die erste Bandbreite. Erfindungsgemäß ist wie erläutert dennoch eine eindeutige Bestimmung der Wanddicke des Gegenstandes möglich. Gleichzeitig lassen sich Messvorrichtungen mit geringer Bandbreite besonders einfach und kostengünstig realisieren.

Die erste Bandbreite kann nach einer weiteren Ausgestaltung weniger als einer Periode der bestimmten periodischen Referenzverläufe entsprechen. Beispielsweise kann die erste Bandbreite kleiner 50 GHz, vorzugsweise kleiner 40 GHz, sein. Wie eingangs erläutert, bestimmt die Bandbreite der Terahertzstrahlung der ersten (und zweiten) Messvorrichtung den für die Auswertung zur Verfügung stehenden Bereich der Periode des Signalverlaufs und entsprechend der periodischen Referenzverläufe. Durch die erfindungsgemäße Kombination einer ersten Messvorrichtung mit einer zweiten Messvorrichtung, die auf unterschiedlichen Frequenzen arbeiten, ist es nicht erforderlich, die Bandbreite der ersten Messvorrichtung derart groß zu wählen, dass hiermit bereits eine eindeutige Identifizierung des periodischen Referenzverlaufs möglich wäre. Damit kann die erste Messvorrichtung einfacher und kostengünstiger realisiert werden, wobei dennoch eine eindeutige Bestimmung der Wanddicke möglich ist. Zum Beispiel ist es möglich, dass die erste Bandbreite nicht mehr als einer Dreiviertelperiode, vorzugsweise nicht mehr als einer halben Periode, der bestimmten periodischen Referenzverläufe entspricht. Somit werden auch die eingangs erläuterten Nachteile von Messvorrichtungen mit großer Bandbreite vermieden.

Vor dem erläuterten Hintergrund ist es weiter möglich, dass die zweite Bandbreite weniger als einer halben Periode der bestimmten periodischen Referenzverläufe entspricht. Beispielsweise kann die zweite Bandbreite kleiner 30 GHz, vorzugweise kleiner 20 GHz, sein. Zum Beispiel ist es möglich, dass die zweite Bandbreite nicht mehr als einer Viertelperiode, vorzugsweise nicht mehr als einer Achtelperiode der bestimmten periodischen Referenzverläufe entspricht. Da mit der zweiten Messvorrichtung nur die Messergebnisse der ersten Messvorrichtung plausibilisiert werden, müssen diese nicht annähernd die Bandbreite aufweisen, die für eine eindeutige Identifizierung des periodischen Referenzverlaufs nötig wäre. Der Aufbau und die Kosten der erfindungsgemäßen Vorrichtung vereinfachen sich.

Dabei beträgt die Länge einer Periode = Lichtgeschwindigkeit / (2 * optische Dicke der Schicht), wobei die optische Dicke = Dicke * Brechungsindex ist. Für die Bandbreiten gilt also entsprechend: Bandbreite < N * Lichtgeschwindigkeit / (2 * optische Dicke der Schicht) mit N=3/4, ½, ¼, 1/8 der jeweiligen genannten Grenze des Periodenanteils.

Die Vorrichtung kann weiterhin eine Fördereinrichtung umfassen, mit der der Gegenstand während der Messung durch die Vorrichtung gefördert wird. Ein länglicher Gegenstand kann zum Beispiel entlang seiner Längsachse gefördert werden. Wie eingangs erläutert, kann der Gegenstand zum Beispiel in einer Extrusionsvorrichtung erzeugt werden. Er kann entsprechend nach seinem Austritt aus der Extrusionsvorrichtung mittels der Fördereinrichtung während der Messung durch die Vorrichtung gefördert werden. Die Vorrichtung kann auch die Extrusionsvorrichtung umfassen. Die Vorrichtung kann auch den Gegenstand umfassen.

Nach einer weiteren Ausgestaltung können der erste Sender und der zweite Sender derart angeordnet sein, dass sie in Förderrichtung des Gegenstandes versetzt zueinander Terahertzstrahlung auf den Gegenstand aussenden. Der erste Sender und der zweite Sender können insbesondere derart angeordnet sein, dass sie Terahertzstrahlung unter im Wesentlichen denselben Winkel und auf im Wesentlichen denselben Ort auf der Oberfläche des Gegenstandes aussenden. Für optimale Mess- und Auswerteergebnisse ist es ideal, wenn die erste Messvorrichtung genau den gleichen Abschnitt des Gegenstandes aus der gleichen Richtung vermisst wie die zweite Messvorrichtung. Wenn zum Beispiel der Gegenstand während der Messung durch die Vorrichtung gefördert wird, ist dies unter Berücksichtigung der Fördergeschwindigkeit durch eine in Förderrichtung entsprechend versetzte Anordnung und getaktete Aktivierung des ersten Senders und Empfängers sowie des zweiten Senders und Empfängers möglich. Allerdings ist die Erfindung nicht darauf angewiesen, dass von der ersten und zweiten Messvorrichtung die exakt gleiche Wanddicke vermessen werden. Insbesondere wenn der zweite Sender und Empfänger bei einer vergleichsweise niedrigen Mittenfrequenz arbeiten, sind Abweichungen des Messortes zu einem gewissen Grad möglich. Dies gilt insbesondere, wenn sich die Geometrie des Gegenstandes örtlich und/oder zeitlich ausreichend langsam ändert, was bei der Extrusion von Kunststoff- oder Glasgegenständen regelmäßig der Fall ist. Eine entsprechend versetzte Anordnung des ersten Senders und Empfängers zu dem zweiten Sender und Empfänger vereinfacht den Messaufbau und erlaubt es, den jeweiligen Aufbau für den jeweiligen Frequenzbereich optimiert durchzuführen.

Es ist nach einer weiteren Ausgestaltung möglich, dass der erste Sender und der zweite Sender durch eine gemeinsame Sendeeinrichtung ausgebildet sind, wobei die gemeinsame Sendeeinrichtung sowohl Terahertzstrahlung in dem ersten Frequenzbereich mit der ersten Bandbreite um die erste Mittenfrequenz als auch Terahertzstrahlung in dem zweiten Frequenzbereich mit der zweiten Bandbreite um die von der ersten Mittenfrequenz unterschiedliche zweite Mittenfrequenz aussendet und/oder dass der erste Empfänge und der zweite Empfänger durch eine gemeinsame Empfangseinrichtung ausgebildet sind, wobei die gemeinsame Empfangseinrichtung sowohl Terahertzstrahlung (40) in dem ersten Frequenzbereich mit der ersten Bandbreite um die erste Mittenfrequenz als auch Terahertzstrahlung (42) in dem zweiten Frequenzbereich mit der zweiten Bandbreite um die von der ersten Mittenfrequenz unterschiedliche zweite Mittenfrequenz empfängt. Bei dieser Ausgestaltung ist somit nur ein Sender bzw. nur ein Sender vorgesehen, der in unterschiedlichen Bandbreiten Terahertzstrahlung aussenden bzw. empfangen kann und somit sowohl den ersten Sender bzw. Empfänger der ersten Messvorrichtung als auch den zweiten Sender bzw. Empfänger der zweiten Messvorrichtung bildet. Dabei ist auch ein gleichzeitiges Senden und Empfangen der Terahertzstrahlung in unterschiedlichen Frequenzbändern möglich, im Sinne eines Frequenz-Diversitätsverfahrens. Damit kann eine besonders kompakte Messanordnung realisiert werden, da zumindest einige Komponenten für beide Frequenzen verwendet werden können und somit die gemeinsamen Vorrichtungen kleiner ausfallen können als zwei spezialisierte Vorrichtungen. Dies kann beispielsweise auch für ein Handheld-Gerät vorteilhaft sein. Auch lassen sich so gegebenenfalls reduzierte Kosten erreichen. Ein weiterer Vorteil ist, dass die Messung am gleichen Ort, aus der gleichen Richtung und praktisch zeitgleich erfolgen kann.

Das erfindungsgemäße Verfahren kann mit der erfindungsgemäßen Vorrichtung durchgeführt werden. Entsprechend kann die erfindungsgemäße Vorrichtung zur Durchführung des erfindungsgemäßen Verfahrens ausgebildet sein.

Ein Ausführungsbeispiel der Erfindung wird nachfolgend anhand von Figuren näher erläutert. Es zeigen schematisch:
- Figur 1: eine erfindungsgemäße Vorrichtung in einer schematischen Seitenansicht,
- Figur 2: eine geschnittene Teildarstellung der Vorrichtung aus Figur 1,
- Figur 3: ein Diagramm zur Veranschaulichung eines ersten Schritts des erfindungsgemäßen Verfahrens,
- Figur 4: ein Diagramm zur Veranschaulichung eines zweiten Schritts des erfindungsgemäßen Verfahrens, und
- Figur 5: ein weiteres Diagramm zur Veranschaulichung des erfindungsgemäßen Verfahrens.

Soweit nicht anderes angegeben ist, bezeichnen in den Figuren gleiche Bezugszeichen gleiche Gegenstände.

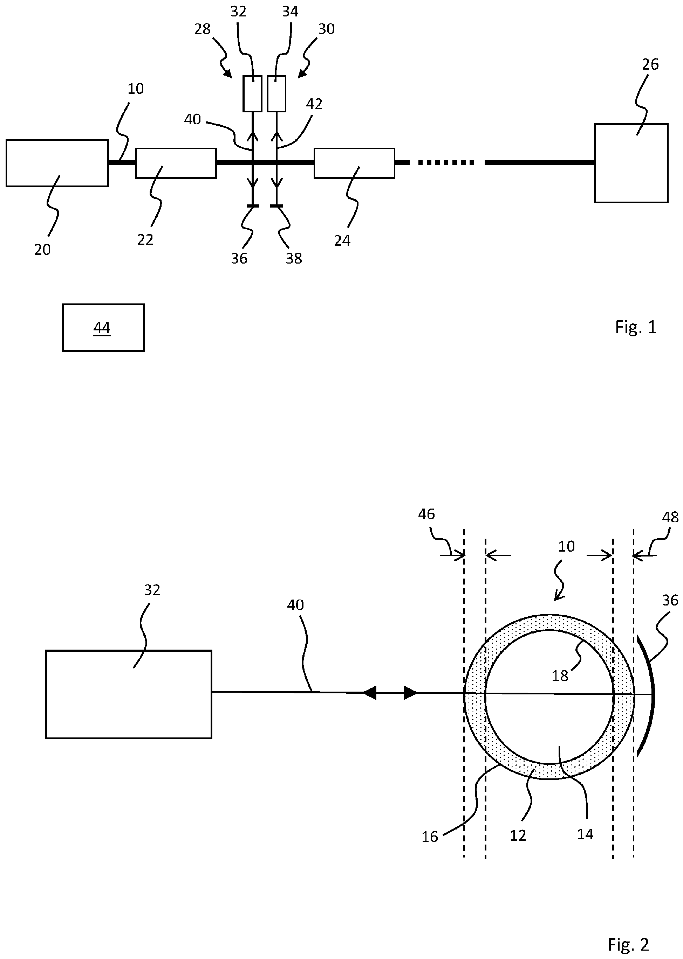

In den Figuren 1 und 2 ist ein rohrförmiger Strang 10, vorliegend ein Rohr 10, insbesondere ein Kunststoffrohr 10, dargestellt, welches eine Wand 12, einen durch das Rohr 10 begrenzten Hohlraum 14, eine im Querschnitt kreisförmige äußere Oberfläche 16 und eine im Querschnitt ebenfalls kreisförmige innere Oberfläche 18 besitzt, die den Hohlraum 14 begrenzt. Das Rohr 10 wird im vorliegenden Beispiel in einer Extrusionsvorrichtung 20 extrudiert und mittels einer geeigneten Fördereinrichtung entlang seiner Längsachse gefördert, in Figur 1 von links nach rechts. Nach Austritt aus der Extrusionsvorrichtung 20 durchläuft das Rohr 10 zunächst eine erste Kühlstrecke 22, in der das Rohr 10, welches stark erhitzt und noch nicht vollständig verfestigt ist, also noch rekristallisierende und fließfähige Anteile (Schmelze) aufweist, abgekühlt wird. Die erste Kühlstrecke 22 kann eine Kalibriereinrichtung, insbesondere eine Kalibrierhülse umfassen, gegen die das Rohr 10 zum Beispiel durch ein Vakuum und den Normaldruck im Inneren des Rohrs 10 gepresst wird. Dadurch wird der durch die Extrusionsvorrichtung 20 vorgeformte Außendurchmesser des Rohrs 10 endgültig festgelegt. Im weiteren Verlauf durchläuft das Rohr 10 mindestens eine weitere Kühlstrecke 24, in der eine weitere Abkühlung erfolgt. Durch die nachfolgende Strichelung in Figur 1 ist veranschaulicht, dass weitere Kühlstrecken vorgesehen sein können. Nach vollständiger Verfestigung des Rohrs 10 wird dieses in einer zum Beispiel eine fliegende Säge aufweisenden Ablängeinrichtung 26 auf vorgegebene Abschnitte abgelängt.

Zwischen der ersten Kühlstrecke 22 und der weiteren Kühlstrecke 24 befinden sich eine erste Messvorrichtung 28 und eine zweite Messvorrichtung 30, die in Förderrichtung des Rohrs 10 stromab der ersten Messvorrichtung 28 angeordnet ist. Die erste Messvorrichtung 28 umfasst einen ersten Transceiver 32, umfassend einen ersten Sender für Terahertzstrahlung und einen ersten Empfänger für Terahertzstrahlung. Die zweite Messvorrichtung 30 umfasst einen zweiten Transceiver 34, umfassend einen zweiten Sender für Terahertzstrahlung und einen zweiten Empfänger für Terahertzstrahlung. Weiterhin umfasst die erste Messvorrichtung 28 einen ersten Reflektor 36 auf einer dem ersten Transceiver 32 gegenüberliegenden Seite des Rohrs 10. Die zweite Messvorichtung 30 umfasst einen zweiten Reflektor 38, ebenfalls auf einer dem zweiten Transceiver 34 gegenüberliegenden Seite des Rohrs 10. Von dem ersten Sender des ersten Transceivers 32 senkrecht zur Förderrichtung auf das Rohr 10 ausgesandte Terahertzstrahlung 40 wird entsprechend teilweise an Grenzflächen des Rohrs 10 und teilweise an dem Reflektor 36 reflektiert und gelangt zurück zu dem ersten Empfänger des ersten Transceivers 32. Entsprechend gelangt von dem zweiten Sender des zweiten Transceivers 34 senkrecht zur Förderrichtung des Rohrs 10 ausgesandte Terahertzstrahlung 42 nach ihrer Reflexion an Grenzflächen des Rohrs 10 und an dem Reflektor 38 zurück zu dem zweiten Empfänger des zweiten Transceivers 34. In Figur 2 ist dies beispielhaft für die erste Messvorrichtung 28 dargestellt. Die Reflektoren 36, 38 können gekrümmt sein, wie dies in Figur 2 für dne Reflektor 36 beispielhaft gezeigt ist. Die Messwerte des ersten Empfängers und des zweiten Empfängers liegen an einer Auswerteeinrichtung 44 der Vorrichtung an. In nachfolgend erläuterter Weise kann durch die Auswerteeinrichtung 44 auf Grundlage der von dem ersten und zweiten Empfänger der ersten und zweiten Messvorrichtung 28, 30 empfangenen Terahertzstrahlung 40, 42 die Dicke der vorderen und/oder hinteren Wand 46, 48 des Rohrs 10 bestimmt werden.

Der erste Sender der ersten Messvorrichtung 28 sendet Terahertzstrahlung 40 in einem ersten Frequenzbereich mit einer ersten Bandbreite um eine ersten Mittenfrequenz aus. Der zweite Sender der zweiten Messvorrichtung 30 sendet Terahertzstrahlung 42 in einem zweiten Frequenzbereich mit einer zweiten Bandbreite um eine von der ersten Mittenfrequenz unterschiedliche zweite Mittenfrequenz aus. Die zweite Mittenfrequenz kann kleiner sein als die erste Mittenfrequenz. Beispielsweise kann die zweite Mittenfrequenz der ersten Mittenfrequenz entsprechen, multipliziert mit einem Faktor in einem Bereich von 0,3 bis 0,7, vorzugsweise von 0,4 bis 0,6. Es ist weiter möglich, dass der erste Frequenzbereich und der zweite Frequenzbereich keine Überlappung aufweisen. Außerdem kann die zweite Bandbreite kleiner sein als die erste Bandbreite. Beispielsweise kann die erste Bandbreite kleiner 50 GHz, vorzugsweise kleiner 40 GHz, sein. Die zweite Bandbreite kann kleiner 30 GHz, vorzugweise kleiner 20 GHz, sein. Die erste Mittenfrequenz des ersten Senders der ersten Messvorrichtung 28 kann beispielsweise in einem Bereich zwischen 130 und 160 GHz liegen. Die zweite Mittenfrequenz des zweiten Senders der zweiten Messvorrichtung 30 kann beispielsweise in einem Bereich zwischen 80 und 90 GHz liegen. Der erste Sender und der zweite Sender können FMCW-Strahlung aussenden. Die Anordnung der ersten und zweiten Messvorrichtung 28, 30 und der Zeitpunkt ihrer Ansteuerung kann derart gewählt werden, dass sie bei vorgegebener Fördergeschwindigkeit des Rohrs 10 Terahertzstrahlung 40, 42 unter im Wesentlichen demselben Winkel und im Wesentlichen demselben Ort auf der Oberfläche des Rohrs 10 aussenden, die dann entsprechend von dem ersten bzw. zweiten Empfänger empfangen wird.

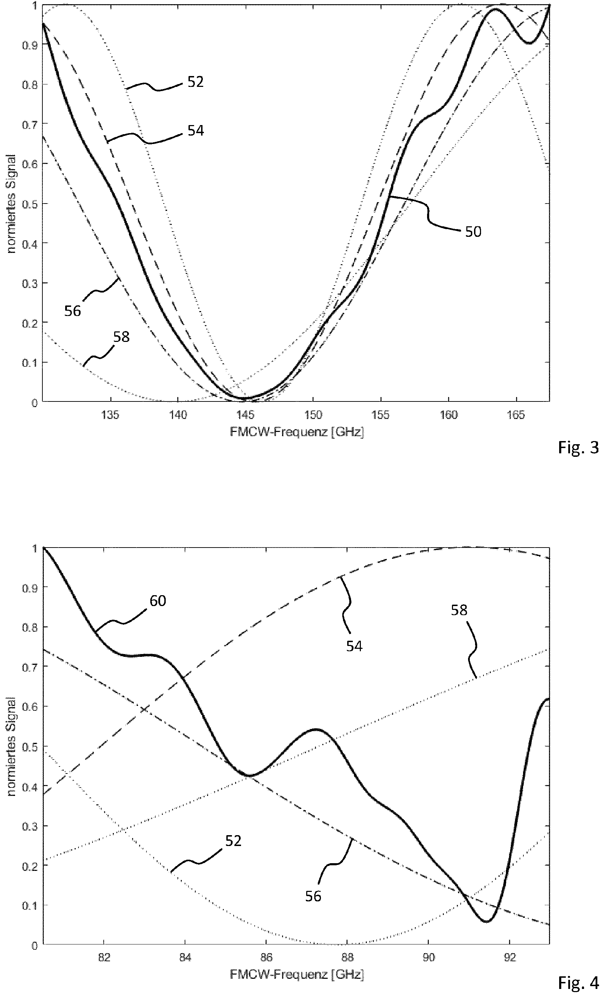

Figur 3 zeigt einen Signalverlauf 50 der Messwerte des ersten Empfängers der ersten Messvorrichtung 28 als durchgezogene Linie. Der Signalverlauf 50 ergibt sich durch Mischen der beispielsweise an den die vordere Wand 46 begrenzenden Grenzflächen des Rohrs 10 reflektierten Signalanteilen, wobei dieses gemischte Signal zusätzlich mittels eines Tiefpasses gefiltert ist. Der Signalverlauf 50 ist mit einer Frequenz moduliert, die proportional zu der Wanddicke vorliegend der vorderen Wand 46 des Rohrs 10 ist. Die zu vermessende Wand 46 kann eine Dicke von zum Beispiel weniger als 1 cm, beispielsweise weniger als 2 mm, zum Beispiel etwa 1,8 mm, aufweisen. Wie in Figur 3 weiter zu erkennen, deckt die Bandbreite der ersten Messvorrichtung 28 keine vollständige Periode ab. Vielmehr ist nur ein Teil der Periode zu erkennen. Außerdem ist in Figur 3 zu erkennen, dass das Signal aufgrund verschiedener Störungsanteile von einem grundsätzlich zu erwartenden idealen harmonischen Verlauf abweicht.

Mittels der Auswerteeinrichtung 44 werden beispielsweise mittels numerischer Kurvenfitverfahren aus einer Vielzahl periodischer Referenzverläufe, insbesondere harmonischer Referenzverläufe, vier Referenzverläufe 52, 54, 56, 58 bestimmt, die dem Signalverlauf 50 aus der Vielzahl von Referenzverläufen am besten angenähert sind. In Figur 3 sind die bestimmten periodischen Referenzverläufe 52, 54, 56, 58 punktiert, gestrichelt und strichpunktiert dargestellt. Wie in Figur 3 zu erkennen, ist eine eindeutige Bestimmung des dem Signalverlauf 50 optimal entsprechenden Referenzverlaufs 52, 54, 56, 58 allein auf Grundlage des Signalverlaufs 50 des ersten Empfängers nicht eindeutig möglich.

Um aus den anhand des Signalverlaufs 50 des ersten Empfängers bestimmten harmonischen Referenzverläufen 52, 54, 56, 58 nun den dem Signalverlauf 50 am besten entsprechenden Referenzverlauf zu identifizieren, werden die periodischen Referenzverläufe 52, 54, 56, 58 mit einem Signalverlauf 60 der Messwerte des zweiten Empfängers der zweiten Messvorrichtung 30 verglichen. Dieser Signalverlauf 60 ist in Figur 4 als durchgezogene Linie dargestellt. Wiederum ergibt sich dieser durch Mischen der an den beiden die vordere Wand 46 begrenzenden Grenzflächen reflektierten Signalanteile, wobei der Signalverlauf 60 wiederum mittels eines Tiefpasses gefiltert ist. Figur 4 zeigt den Signalverlauf der Messwerte des zweiten Empfängers der zweiten Messvorrichtung 30, der über dem zweiten Frequenzbereich der zweiten Messvorrichtung 30 aufgetragen ist. In Figur 4 ist weiter zu erkennen, dass der Signalverlauf 60 der zweiten Messvorrichtung 30 aufgrund von Störungssignalen und aufgrund der erheblich geringeren Bandbreite der zweiten Messvorrichtung 30, von in dem gezeigten Beispiel lediglich etwa 12,5 GHz im Vergleich zu etwa 37,5 GHz der ersten Messvorrichtung 28, deutlich weniger als einer Periode des im Idealfall einem harmonischen Verlauf entsprechenden Signalverlaufs 60 entspricht. Allein anhand des Signalverlaufs 60 der Messwerte des zweiten Empfängers wäre eine Frequenzbestimmung in eindeutiger Weise unmöglich.

In Figur 4 sind nun wiederum die gemäß Figur 3 bestimmten periodischen Referenzverläufe 52, 54, 56, 58 dargestellt. Dabei ist gut zu erkennen, dass die in Figur 3 noch relativ eng beieinander liegenden Referenzverläufe 52, 54, 56, 58 in Figur 4 aufgrund des anderen Frequenzbereichs der zweiten Messvorrichtung 30 deutlich unterscheidbar auseinanderlaufen. Anhand von Figur 4 ist der strichpunktierte Referenzverlauf 56 eindeutig als der den Signalverläufen 50 und 60 am besten entsprechende Referenzverlauf 56 identifizierbar. Die Frequenz dieses harmonischen Referenzverlaufs 56 kann entsprechend zur Grundlage der Dickenbestimmung der vorderen Wand 46 genutzt werden.

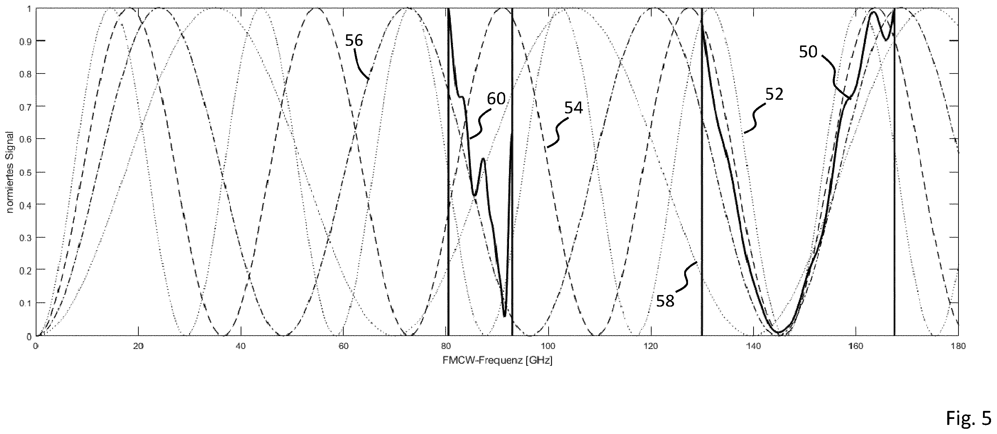

In Figur 5 sind lediglich zu Veranschaulichungszwecken die Frequenzbereiche der ersten und zweiten Messvorrichtung 28, 30 gemeinsam mit den jeweiligen Signalverläufen 50, 60 und den periodischen Referenzverläufen 52, 54, 56, 58 über einen großen Frequenzbereich von 0 bis 180 GHz dargestellt. Tatsächlich erfolgt im Gegensatz zum oben erläuterten Stand der Technik ein derartiges Zusammenführen der Signalverläufe erfindungsgemäß gerade nicht. In Figur 5 ist aber gut das erfindungsgemäß ausgenutzte Auseinanderlaufen der im Frequenzbereich des Signalverlaufs 50 der ersten Messvorrichtung 28 noch eng beieinanderliegenden Phasen der Referenzverläufe 52, 54, 56, 58 im Frequenzbereich des Signalverlaufs 60 der zweiten Messvorrichtung 30 zu erkennen.

### Bezugszeichenliste

- 10: Rohr
- 12: Wand
- 14: Hohlraum
- 16: äußere Oberfläche
- 18: innere Oberfläche
- 20: Extrusionsvorrichtung
- 22: Kühlstrecke
- 24: Kühlstrecke
- 26: Ablängeinrichtung
- 28: erste Messvorrichtung
- 30: zweite Messvorrichtung
- 32: erster Transceiver
- 34: zweiter Transceiver
- 36: erster Reflektor
- 38: zweiter Reflektor
- 40: Terahertzstrahlung
- 42: Terahertzstrahlung
- 44: Auswerteeinrichtung
- 46: vordere Wand
- 48: hintere Wand
- 50: Signalverlauf
- 52: Referenzverlauf
- 54: Referenzverlauf
- 56: Referenzverlauf
- 58: Referenzverlauf
- 60: Signalverlauf

## Patentansprüche

1. Vorrichtung zum Bestimmen der Wanddicke eines insbesondere flachen oder länglichen Gegenstandes (10), umfassend eine erste Messvorrichtung (28) umfassend einen ersten Sender für Terahertzstrahlung (40) und einen ersten Empfänger für Terahertzstrahlung (40), und umfassend eine zweite Messvorrichtung (30) umfassend einen zweiten Sender für Terahertzstrahlung (42) und einen zweiten Empfänger für Terahertzstrahlung (42), wobei die erste Messvorrichtung (28) so angeordnet ist, dass der erste Sender Terahertzstrahlung (40) auf den Gegenstand (10) aussendet und der erste Empfänger von Grenzflächen des Gegenstands (10) reflektierte, von dem ersten Sender ausgesendete Terahertzstrahlung (40) empfängt, und wobei die zweite Messvorrichtung (30) so angeordnet ist, dass der zweite Sender Terahertzstrahlung (42) auf den Gegenstand (10) aussendet und der zweite Empfänger von Grenzflächen des Gegenstands (10) reflektierte, von dem zweiten Sender ausgesendete Terahertzstrahlung (42) empfängt, wobei der erste Sender Terahertzstrahlung (40) in einem ersten Frequenzbereich mit einer ersten Bandbreite um eine erste Mittenfrequenz aussendet und der zweite Sender Terahertzstrahlung (42) in einem zweiten Frequenzbereich mit einer zweiten Bandbreite um eine von der ersten Mittenfrequenz unterschiedliche zweite Mittenfrequenz aussendet, und umfassend eine Auswerteeinrichtung (44), an der die Messwerte des ersten und zweiten Empfängers zum Bestimmen der Wanddicke des Gegenstandes (10) anliegen,
**dadurch gekennzeichnet, dass** die Auswerteeinrichtung (44) ausgebildet ist, mehrere einem Signalverlauf (50) der Messwerte des ersten Empfängers angenäherte periodische Referenzverläufe (52, 54, 56, 58) zu bestimmen, die bestimmten periodischen Referenzverläufe (52, 54, 56, 58) mit einem Signalverlauf (60) der Messwerte des zweiten Empfängers zu vergleichen und aus den bestimmten periodischen Referenzverläufen (52, 54, 56, 58) den dem Signalverlauf (60) der Messwerte des zweiten Empfängers am besten entsprechenden periodischen Referenzverlauf (52, 54, 56, 58) zu identifizieren, und dass die Auswerteeinrichtung (44) weiter dazu ausgebildet ist, anhand des identifizierten Referenzverlaufs (52, 54, 56, 58) die Wanddicke des Gegenstands (10) zu bestimmen.

2. Vorrichtung nach Anspruch 1, **dadurch gekennzeichnet, dass** die Signalverläufe und die periodischen Referenzverläufe (52, 54, 56, 58) Phasenverläufe oder Frequenzverläufe sind.

3. Vorrichtung nach einem der vorhergehenden Ansprüche, **dadurch gekennzeichnet, dass** die periodischen Referenzverläufe (52, 54, 56, 58) harmonische Referenzverläufe (52, 54, 56, 58) sind.

4. Vorrichtung nach einem der vorhergehenden Ansprüche, **dadurch gekennzeichnet, dass** die Auswerteeinrichtung dazu ausgebildet ist, den dem Signalverlauf (60) der Messwerte des zweiten Empfängers am besten entsprechenden periodischen Referenzverlauf (52, 54, 56, 58) anhand eines Vergleichs der Phasen der bestimmten periodischen Referenzverläufe (52, 54, 56, 58) mit der Phase des Signalverlaufs (60) der Messwerte des zweiten Empfängers zu identifizieren.

5. Vorrichtung nach einem der vorhergehenden Ansprüche, **dadurch gekennzeichnet, dass** die zweite Mittenfrequenz kleiner ist als die erste Mittenfrequenz.

6. Vorrichtung nach Anspruch 5, **dadurch gekennzeichnet, dass** die zweite Mittenfrequenz gleich der ersten Mittenfrequenz multipliziert mit einem Faktor in einem Bereich von 0,3 bis 0,7, vorzugsweise mit einem Faktor in einem Bereich von 0,4 bis 0,6, ist.

7. Vorrichtung nach einem der vorhergehenden Ansprüche, **dadurch gekennzeichnet, dass** der erste Frequenzbereich und der zweite Frequenzbereich keine Überlappung aufweisen.

8. Vorrichtung nach einem der vorhergehenden Ansprüche, **dadurch gekennzeichnet, dass** die zweite Bandbreite kleiner ist als die erste Bandbreite.

9. Vorrichtung nach einem der vorhergehenden Ansprüche, **dadurch gekennzeichnet, dass** die erste Bandbreite weniger als einer Periode, vorzugsweise nicht mehr als einer Dreiviertelperiode, weiter vorzugsweise nicht mehr als einer halben Periode, der bestimmten periodischen Referenzverläufe (52, 54, 56, 58) entspricht.

10. Vorrichtung nach einem der vorhergehenden Ansprüche, **dadurch gekennzeichnet, dass** die erste Bandbreite kleiner als 50 GHz, vorzugsweise kleiner als 40 GHz, ist.

11. Vorrichtung nach einem der vorhergehenden Ansprüche, **dadurch gekennzeichnet, dass** die zweite Bandbreite weniger als einer halben Periode, vorzugsweise nicht mehr als einer Viertelperiode, weiter vorzugsweise nicht mehr als einer Achtelperiode, der bestimmten periodischen Referenzverläufe (52, 54, 56, 58) entspricht.

12. Vorrichtung nach einem der vorhergehenden Ansprüche, **dadurch gekennzeichnet, dass** die zweite Bandbreite kleiner als 30 GHz, vorzugsweise kleiner als 20 GHz, ist.

13. Vorrichtung nach einem der vorhergehenden Ansprüche, **dadurch gekennzeichnet, dass** die Vorrichtung weiterhin eine Fördereinrichtung umfasst, mit der der Gegenstand (10) während der Messung durch die Vorrichtung gefördert wird.

14. Vorrichtung nach einem der vorhergehenden Ansprüche, **dadurch gekennzeichnet, dass** der erste Sender und der zweite Sender derart angeordnet sind, dass sie in Förderrichtung des Gegenstandes (10) versetzt zueinander Terahertzstrahlung (40, 42) auf den Gegenstand (10) aussenden.

15. Vorrichtung nach einem der vorhergehenden Ansprüche, **dadurch gekennzeichnet, dass** der erste Sender und der zweite Sender derart angeordnet sind, dass sie Terahertzstrahlung (40, 42) unter im Wesentlichen demselben Winkel und auf im Wesentlichen denselben Ort auf der Oberfläche des Gegenstands (10) aussenden.

16. Vorrichtung nach einem der vorhergehenden Ansprüche, **dadurch gekennzeichnet, dass** der erste Sender und der zweite Sender durch eine gemeinsame Sendeeinrichtung ausgebildet sind, wobei die gemeinsame Sendeeinrichtung sowohl Terahertzstrahlung (40) in dem ersten Frequenzbereich mit der ersten Bandbreite um die erste Mittenfrequenz als auch Terahertzstrahlung (42) in dem zweiten Frequenzbereich mit der zweiten Bandbreite um die von der ersten Mittenfrequenz unterschiedliche zweite Mittenfrequenz aussendet und/oder dass der erste Empfänge und der zweite Empfänger durch eine gemeinsame Empfangseinrichtung ausgebildet sind, wobei die gemeinsame Empfangseinrichtung sowohl Terahertzstrahlung (40) in dem ersten Frequenzbereich mit der ersten Bandbreite um die erste Mittenfrequenz als auch Terahertzstrahlung (42) in dem zweiten Frequenzbereich mit der zweiten Bandbreite um die von der ersten Mittenfrequenz unterschiedliche zweite Mittenfrequenz empfängt.

17. Verfahren zum Bestimmen der Wanddicke eines insbesondere flachen oder länglichen Gegenstandes (10), bei dem ein erster Sender Terahertzstrahlung (40) auf den Gegenstand (10) aussendet und von Grenzflächen des Gegenstands (10) reflektierte, von dem ersten Sender ausgesendete Terahertzstrahlung (40) von einem ersten Empfänger empfangen wird, und bei dem ein zweiter Sender Terahertzstrahlung (42) auf den Gegenstand (10) aussendet und von Grenzflächen des Gegenstands (10) reflektierte, von dem zweiten Sender ausgesendete Terahertzstrahlung (42) von einem zweiten Empfänger empfangen wird, wobei der erste Sender Terahertzstrahlung (40) in einem ersten Frequenzbereich mit einer ersten Bandbreite um eine erste Mittenfrequenz aussendet und der zweite Sender Terahertzstrahlung (42) in einem zweiten Frequenzbereich mit einer zweiten Bandbreite um eine von der ersten Mittenfrequenz unterschiedliche zweite Mittenfrequenz aussendet,
**dadurch gekennzeichnet, dass** mehrere einem Signalverlauf (50) der Messwerte des ersten Empfängers angenäherte periodische Referenzverläufe (52, 54, 56, 58) bestimmt werden, die bestimmten periodischen Referenzverläufe (52, 54, 56, 58) mit einem Signalverlauf (60) der Messwerte des zweiten Empfängers verglichen werden und aus den bestimmten periodischen Referenzverläufen (52, 54, 56, 58) der dem Signalverlauf (60) der Messwerte des zweiten Empfängers am besten entsprechende periodische Referenzverlauf (52, 54, 56, 58) identifiziert wird, und dass anhand des identifizierten Referenzverlaufs (52, 54, 56, 58) die Wanddicke des Gegenstands (10) bestimmt wird.

18. Verfahren nach Anspruch 17, **dadurch gekennzeichnet, dass** der Gegenstand (10) während der Messung mittels einer Fördereinrichtung durch den Messbereich der Vorrichtung gefördert wird.

19. Verfahren nach einem der Ansprüche 17 oder 18, **dadurch gekennzeichnet, dass** es mit einer Vorrichtung nach einem der Ansprüche 1 bis 16 durchgeführt wird.

## Claims

1. A device for determining the wall thickness of, in particular, a flat or elongated object (10) comprising a first measuring device (28) comprising a first transmitter for terahertz radiation (40) and a first receiver for terahertz radiation (40), and comprising a second measuring device (30) comprising a second transmitter for terahertz radiation (42) and a second receiver for terahertz radiation (42), wherein the first measuring device (28) is arranged such that the first transmitter emits terahertz radiation (40) onto the object (10) and the first receiver receives terahertz radiation (40) reflected from boundary surfaces of the object (10) and emitted by the first transmitter, and wherein the second measuring device (30) is arranged such that the second transmitter emits terahertz radiation (42) onto the object (10) and the second receiver receives terahertz radiation (42) reflected from boundary surfaces of the object (10) and emitted by the second transmitter, wherein the first transmitter emits terahertz radiation (40) in a first frequency range with a first bandwidth around a first center frequency and the second transmitter emits terahertz radiation (42) in a second frequency range with a second bandwidth around a second center frequency which is different from the first center frequency, and comprising an evaluation apparatus (44) to which the measured values of the first and second receiver are applied for determining the wall thickness of the object (10),
**characterized in that** the evaluation apparatus (44) is configured to determine a plurality of periodic reference profiles (52, 54, 56, 58) approximated to a signal profile (50) of the measured values of the first receiver, to compare the determined periodic reference profiles (52, 54, 56, 58) with a signal profile (60) of the measured values of the second receiver and to identify from the determined periodic reference profiles (52, 54, 56, 58) the periodic reference profile (52, 54, 56, 58) corresponding best to the signal profile (60) of the measured values of the second receiver, and that the evaluation apparatus (44) is also configured to determine the wall thickness of the object (10) on the basis of the identified reference profile (52, 54, 56, 58).

2. The device according to claim 1, **characterized in that** the signal profiles and the periodic reference profiles (52, 54, 56, 58) are phase profiles or frequency profiles.

3. The device according to one of the preceding claims **characterized in that** the periodic reference profiles (52, 54, 56, 58) are harmonic reference profiles (52, 54, 56, 58).

4. The device according to one of the preceding claims, **characterized in that** the evaluation apparatus is configured to identify the periodic reference profile (52, 54, 56, 58) corresponding best to the signal profile (60) of the measured values of the second receiver on the basis of a comparison of the phases of the determined periodic reference profiles (52, 54, 56, 58) with the phase of the signal profile (60) of the measured values of the second receiver.

5. The device according to one of the preceding claims, **characterized in that** the second center frequency is lower than the first center frequency.

6. The device according to claim 5, **characterized in that** the second center frequency is equal to the first center frequency multiplied by a factor ranging from 0.3 to 0.7, preferably by a factor ranging from 0.4 to 0.6.

7. The device according to one of the preceding claims, **characterized in that** the first frequency range and the second frequency range have no overlap.

8. The device according to one of the preceding claims, **characterized in that** the second bandwidth is smaller than the first bandwidth.

9. The device according to one of the preceding claims, **characterized in that** the first bandwidth corresponds to less than one period, preferably no more than a three-quarter period, further preferably no more than half a period, of the determined periodic reference profiles (52, 54, 56, 58).

10. The device according to one of the preceding claims, **characterized in that** the first bandwidth is less than 50 GHz, preferably less than 40 GHz.

11. The device according to one of the preceding claims, **characterized in that** the second bandwidth corresponds to less than half a period, preferably no more than a quarter period, further preferably no more than an eighth period, of the determined periodic reference profiles (52, 54, 56, 58).

12. The device according to one of the preceding claims, **characterized in that** the second bandwidth is less than 30 GHz, preferably less than 20 GHz.

13. The device according to one of the preceding claims, **characterized in that** the device also comprises a conveying apparatus by which the object (10) is conveyed during the measurement by the device.

14. The device according to one of the preceding claims, **characterized in that** the first transmitter and the second transmitter are arranged such that they emit terahertz radiation (40, 42) onto the object (10), offset to one another in the conveying direction of the object (10).

15. The device according to one of the preceding claims **characterized in that** the first transmitter and the second transmitter are arranged such that they emit terahertz radiation (40, 42) at substantially the same angle and at substantially the same location on the surface of the object (10).

16. The device according to one of the preceding claims, **characterized in that** the first transmitter and the second transmitter are configured by a common transmitting apparatus, wherein the common transmitting apparatus emits both terahertz radiation (40) in the first frequency range with the first bandwidth around the first center frequency and terahertz radiation (42) in the second frequency range with the second bandwidth around the second center frequency which is different from the first center frequency and/or that the first receiver and the second receiver are configured by a common receiving apparatus, wherein the common receiving apparatus receives both terahertz radiation (40) in the first frequency range with the first bandwidth around the first center frequency and terahertz radiation (42) in the second frequency range with the second bandwidth around the second center frequency which is different from the first center frequency.

17. A method for determining the wall thickness of, in particular, a flat or elongated object (10), wherein a first transmitter emits terahertz radiation (40) onto the object (10) and terahertz radiation (40) reflected from boundary surfaces of the object (10) and emitted by the first transmitter is received by a first receiver, and wherein a second transmitter emits terahertz radiation (42) onto the object (10) and terahertz radiation (42) reflected from the boundary surfaces of the object (10) and emitted by the second transmitter is received by a second receiver, wherein the first transmitter emits terahertz radiation (40) in a first frequency range with a first bandwidth around a first center frequency and the second transmitter emits terahertz radiation (42) in a second frequency range with a second bandwidth around a second center frequency which is different from the first center frequency,
**characterized in that** a plurality of periodic reference profiles (52, 54, 56, 58) approximated to a signal profile (50) of the measured values of the first receiver are determined, the determined periodic reference profiles (52, 54, 56, 58) are compared with a signal profile (60) of the measured values of the second receiver and from the determined periodic reference profiles (52, 54, 56, 58) the periodic reference profile (52, 54, 56, 58) corresponding best to the signal profile (60) of the measured values of the second receiver is identified, and that the wall thickness of the object (10) is determined on the basis of the identified reference profile (52, 54, 56, 58).

18. The method according to claim 17, **characterized in that** the object (10) is conveyed during the measurement by means of a conveying apparatus through the measuring region of the device.

19. The method according to one of claims 17 or 18, **characterized in that** it is carried out by a device according to one of claims 1 to 16.

## Revendications

1. Dispositif de détermination de l'épaisseur de paroi d'un objet (10) en particulier plat ou oblong, comportant une premier dispositif de mesure (28) comportant un premier émetteur pour un rayonnement térahertz (40) et un premier récepteur pour un rayonnement térahertz (40), et comportant un deuxième dispositif de mesure (30) comportant un deuxième émetteur pour un rayonnement térahertz (42) et un deuxième récepteur pour un rayonnement térahertz (42), dans lequel le premier dispositif de mesure (28) est disposé de telle façon que le premier émetteur émet un rayonnement térahertz (40) vers l'objet (10) et le premier récepteur reçoit un rayonnement térahertz (40) émis par le premier émetteur, réfléchi par des surfaces de délimitation de l'objet (10), et dans lequel le deuxième dispositif de mesure (30) est disposé de telle façon que le deuxième émetteur émet un rayonnement térahertz (42) vers l'objet (10) et le deuxième récepteur reçoit un rayonnement térahertz (42) émis par le deuxième émetteur, réfléchi par des surfaces de délimitation de l'objet (10), dans lequel le premier émetteur émet un rayonnement térahertz (40) dans une première plage de fréquence avec une première largeur de bande autour d'une première fréquence moyenne et le deuxième émetteur émet un rayonnement térahertz (42) dans une deuxième plage de fréquence avec une deuxième largeur de bande autour d'une deuxième fréquence moyenne différente de la première fréquence moyenne, et comportant un dispositif d'évaluation (44) auquel sont appliquées les valeurs de mesure du premier et du deuxième récepteur pour la détermination de l'épaisseur de paroi de l'objet (10),
**caractérisé en ce que** le dispositif d'évaluation (44) est conçu pour déterminer plusieurs courbes de référence périodiques (52, 54, 56, 58) rapprochées d'une forme d'onde (50) des valeurs de mesure du premier récepteur, pour comparer les courbes de référence périodiques (52, 54, 56, 58) déterminées avec une forme d'onde (60) des valeurs de mesure du deuxième récepteur et pour identifier la courbe de référence périodique (52, 54, 56, 58) correspondant le mieux à la forme d'onde (60) des valeurs de mesure du deuxième récepteur, à partir des courbes de référence périodiques (52, 54, 56, 58) déterminées, et **en ce que** le dispositif d'évaluation (44) est en outre conçu pour déterminer l'épaisseur de paroi de l'objet (10) à l'aide de la courbe de référence périodique (52, 54, 56, 58) identifiée.

2. Dispositif selon la revendication 1, **caractérisé en ce que** les formes d'onde et les courbes de référence périodiques (52, 54, 56, 58) sont des courbes de phase ou des courbes de fréquence.

3. Dispositif selon l'une des revendications précédentes, **caractérisé en ce que** les courbes de référence périodiques (52, 54, 56, 58) sont des courbes de référence harmonieuses (52, 54, 56, 58).

4. Dispositif selon l'une des revendications précédentes, **caractérisé en ce que** le dispositif d'évaluation est conçu pour identifier la courbe de référence périodique (52, 54, 56, 58) correspondant le mieux à la forme d'onde (60) des valeurs de mesure du deuxième récepteur à l'aide d'une comparaison des phases des courbes de référence périodiques (52, 54, 56, 58) déterminées avec la phase de la forme d'onde (60) des valeurs de mesure du deuxième récepteur.

5. Dispositif selon l'une des revendications précédentes, **caractérisé en ce que** la deuxième fréquence moyenne est inférieure à la première fréquence moyenne.

6. Dispositif selon la revendication 5, **caractérisé en ce que** la deuxième fréquence moyenne est égale à la première fréquence moyenne multipliée par un facteur dans une plage de 0,3 à 0,7, de préférence par un facteur dans une plage de 0,4 à 0,6.

7. Dispositif selon l'une des revendications précédentes, **caractérisé en ce que** la première plage de fréquence et la deuxième plage de fréquence ne présentent pas de chevauchement.

8. Dispositif selon l'une des revendications précédentes, **caractérisé en ce que** la deuxième largeur de bande est inférieure à la première largeur de bande.

9. Dispositif selon l'une des revendications précédentes, **caractérisé en ce que** la première largeur de bande correspond à moins d'une période, de préférence à pas plus de trois quarts de période, plus préférentiellement à pas plus d'une demi-période, des courbes de référence périodiques (52, 54, 56, 58) déterminées.

10. Dispositif selon l'une des revendications précédentes, **caractérisé en ce que** la première largeur de bande est inférieure à 50 GHz, de préférence inférieure à 40 GHz.

11. Dispositif selon l'une des revendications précédentes, **caractérisé en ce que** la deuxième largeur de bande correspond à moins d'une demi-période, de préférence à pas plus d'un quart de période, plus préférentiellement à pas plus d'un huitième de période, des courbes de référence périodiques (52, 54, 56, 58) déterminées.

12. Dispositif selon l'une des revendications précédentes, **caractérisé en ce que** la deuxième largeur de bande est inférieure 30 GHz, de préférence inférieure à 20 GHz.

13. Dispositif selon l'une des revendications précédentes, **caractérisé en ce que** le dispositif comporte en outre un moyen de transport, avec lequel l'objet (10) est transporté à travers le dispositif pendant la mesure.

14. Dispositif selon l'une des revendications précédentes, **caractérisé en ce que** le premier émetteur et le deuxième émetteur sont disposés de manière à émettre un rayonnement térahertz (40, 42) vers l'objet (10) de façon décalée l'un par rapport à l'autre dans la direction de transport de l'objet (10).

15. Dispositif selon l'une des revendications précédentes, **caractérisé en ce que** le premier émetteur et le deuxième émetteur sont disposés de manière à émettre un rayonnement térahertz (40, 42) essentiellement sous le même angle et essentiellement vers le même endroit à la surface de l'objet (10).

16. Dispositif selon l'une des revendications précédentes, **caractérisé en ce que** le premier émetteur et le deuxième émetteur sont formés par un moyen d'émission commun, dans lequel le moyen d'émission commun émet aussi bien un rayonnement térahertz (40) dans la première plage de fréquence avec la première largeur de bande autour de la première fréquence moyenne qu'un rayonnement térahertz (42) dans la deuxième plage de fréquence avec la deuxième largeur de bande autour de la deuxième fréquence moyenne différente de la première fréquence moyenne et/ou **en ce que** le premier récepteur et le deuxième récepteur sont formés par un moyen de réception commun, dans lequel le moyen de réception commun reçoit aussi bien un rayonnement térahertz (40) dans la première plage de fréquence avec la première largeur de bande autour de la première fréquence moyenne qu'un rayonnement térahertz (42) dans la deuxième plage de fréquence avec la deuxième largeur de bande autour de la deuxième fréquence moyenne différente de la première fréquence moyenne.

17. Procédé de détermination de l'épaisseur de paroi d'un objet (10) en particulier plat ou oblong, dans lequel un premier émetteur émet un rayonnement térahertz (40) vers l'objet (10) et un rayonnement térahertz (40) émis par le premier émetteur, réfléchi par des surfaces de délimitation de l'objet (10), est reçu par un premier récepteur, et dans lequel un deuxième émetteur émet un rayonnement térahertz (42) vers l'objet (10) et un rayonnement térahertz (42) émis par le deuxième émetteur, réfléchi par des surfaces de délimitation de l'objet (10), est reçu pour un deuxième récepteur, dans lequel le premier émetteur émet un rayonnement térahertz (40) dans une première plage de fréquence avec une première largeur de bande autour d'une première fréquence moyenne et le deuxième émetteur émet un rayonnement térahertz (42) dans une deuxième plage de fréquence avec une deuxième largeur de bande autour d'une deuxième fréquence moyenne différente de la première fréquence moyenne,
**caractérisé en ce que** plusieurs courbes de référence périodiques (52, 54, 56, 58) rapprochées d'une forme d'onde (50) des valeurs de mesure du premier récepteur sont déterminées, les courbes de référence périodiques (52, 54, 56, 58) déterminées sont comparées avec une forme d'onde (60) des valeurs de mesure du deuxième récepteur, et la courbe de référence périodique (52, 54, 56, 58) correspondant le mieux à la forme d'onde (60) des valeurs de mesure du deuxième récepteur est identifiée à partir des courbes de référence périodiques (52, 54, 56, 58) déterminées, et **en ce que** l'épaisseur de paroi de l'objet (10) est déterminée à l'aide de la courbe de référence périodique (52, 54, 56, 58) identifiée.

18. Procédé selon la revendication 17, **caractérisé en ce que** l'objet (10) est transporté à l'aide d'un moyen de transport à travers la zone de mesure du dispositif pendant la mesure.

19. Procédé selon l'une des revendications 17 ou 18, **caractérisé en ce qu'**il est mis en œuvre à l'aide d'un dispositif selon l'une des revendications 1 à 16.
